# EUROPEAN PATENT SPECIFICATION

(11) **EP 0 783 095 B1**
(45) Date of publication and mention of the grant of the patent: **21.11.2001**
(21) Application number: 97100016.1
(22) Date of filing: 02.01.1997
(51) Int. Cl.: F42C 17/04

(54) **Passive velocity data system**
Passives Geschwindigkeitsdatensystem
Système passif de données de vitesse

(30) Priority: 05.01.1996 US 583374
(43) Date of publication of application: 09.07.1997
(73) Proprietor: General Dynamics Ordnance and Tactical Systems, Inc., St. Petersburg, Florida 33716-3807 (US)
(72) Inventor: Sigler, John W., LaMirada, California 90638 (US)
(74) Representative: Klunker . Schmitt-Nilson . Hirsch

(56) References cited:
- EP-A- 0 118 122
- EP-A- 0 300 255
- EP-A- 0 359 908
- DE-C- 3 443 534

## Description

This invention relates to a projectile that is fired from a gun or a launcher. More particularly, the invention provides a passive system by which the velocity of the projectile is accurately determined upon exit from the gun muzzle or launcher. The velocity data is then utilized for internal computations within the projectile for, but not limited to, time of flight, burst point prediction and sensor initiation.

Semi-smart munitions have the capability to make a logical decision regarding an intended function. The logical decision is usually based on information provided to the munition at launch, as opposed to a smart projectile that makes a logical decision based on information received in flight.

The semi-smart munition may be any type of munition such as a projectile, bomb or rocket. While the specification is described in terms of projectiles, a subclass of munition that is launched from a gun barrel by a propelling force that acts only while the projectile is within the gun barrel, the invention is intended to encompass all types of munitions and related devices.

In the field of semi-smart projectiles, a major source of error in determining the terminal position of the projectile or munition is the error in accurately knowing the projectile's initial velocity. Even with the best propellant system to launch a projectile, unacceptable variations in launch velocity occur due to environmental conditions or the slightest variability in propellant grain size. With the growing need for smart fuzing, to be able to function at a given range or set of conditions, accurate initial velocity data must be communicated to the fuze within the moving projectile or munition. The initial velocity data can then be used to relate time of flight to the distance traveled.

Many systems have been disclosed to determine projectile velocity, but few of these systems have the capacity to transmit the velocity data to the fuze. U.S. Patent No. 4,677,376 to Ettel et al. discloses front and rear induction coils circumscribing the barrel of a weapon. A fired projectile first passes through the rear coil generating a first pulse. Subsequently, the projectile passes through the front coil generating a second pulse. Knowing the distance between the two coils and the time between the two pulses, it is possible to determine the projectile velocity.

It is also known to measure the velocity of a projectile moving away from a weapon by tracking the projectile by radar and determining the frequency shift due to the Doppler effect. This technique is disclosed in U.S. Patent No. 4,283,989 to Toulios et al.

U.S. Patent No. 4,649,796 to Schmidt discloses information such as a fuze timing delay communicated to a projectile by a transmitter coil mounted on the end of a gun barrel and oscillating at a controlled frequency. The projectile has an internal coil that detects the frequency of oscillation and utilizes this information to set a specific time delay.

The primary purpose of a time delay fuze is to have the projectile function at a given distance from the gun. Using time of flight to gage range can be an accurate method only if the initial velocity is accurately known. The velocity of a projectile fired from a gun is highly variable and can create large errors for semi-smart projectiles needing accurate range versus time of flight data. Many factors influence the variability of projectile velocity including slight variations in the propellant, changes in temperature or humidity, gun barrel temperature and the size and weight variation of the projectile itself.

It is known that systems exist that measure the velocity of a projectile by utilizing a pair of spaced induction coils that detect the passage of the projectile and transmit spaced pulses to a ballistic computer on the weapon system. The ballistic computer calculates the projectile velocity and transmits a corrected time delay to the projectile fuze through a third induction coil to adjust the time delay based on the computed launch velocity.

EP-A-0 359 908 discloses a system in accordance with the precharacterizing part of claim 1, This prior art system includes an electronic circuitry as a means for computing the velocity of the projectile. The detonator timer thereof is fixed to a certain number of clock pulses. A correction is made to the duration of successive pulses to set the timer fuze. The interval between pulses is made longer or shorter to adjust the fuze timing.

The prior art systems have drawbacks. Many of the prior art systems only measure the launch velocity of the projectile and do not communicate this information to the fuze. The systems that do address communication of corrected velocity data to the fuze are physically large systems with multiple coils mounted on the barrel requiring external power to drive the system. These systems are required to perform the measuring, computing and transmitting functions in a limited time interval defined by the distance from the first coil to the gun barrel exit and the projectile velocity. The limited time interval places restrictions on the maximum velocity of a projectile the system can handle and the amount of signal processing performed in the ballistic computer. These systems are useless if the projectile is beyond communication range by the time the corrected velocity data is ready for transmission to the fuze.

Accordingly, it is an object of the invention to provide a system that determines the velocity of a projectile and arms a fuze with a proper delay. It is a feature of the invention, that in one embodiment, passive signal sources are accurately placed along the gun barrel and a receptor that accurately detects passage of the signal sources is placed on-board the projectile. Suitable combinations of signal source and receptor include: (1) magnetic sources and an induction coil receptor; and (2) metallic sources and a magnetometer receptor.

The projectile fuzing system then, internally: (1) computes the time delay between passage of the signal sources by the projectile; (2) via an on-board microprocessor computes the projectile's launch velocity; and (3) updates the time delay solution to the fuze.

Advantageously, the system of the invention eliminates the need for elaborate sensing coils and transmitting coils on the weapon. Another advantage is the elimination of the need for a power source on the weapon, a sizable advantage for portable systems where weight is important. Still another advantage is that since the signal processing is performed on-board the projectile, the processing does not have to take place immediately at the muzzle exit. The microprocessor has a relatively large time period, 10 to 1000 times that of the prior art systems, to determine the launch velocity, compute a corrected time delay and communicate the delay to the fuze.

In accordance with the invention, there is provided a system for determining the velocity of a projectile. This system includes a gun barrel that expels the projectile. At least one passive signal source supported by the gun barrel communicates with a receptor on-board the projectile. A microprocessor on-board the projectile is in electrical communication with the detector. The microprocessor is programmed to compute the velocity of the projectile.

The above stated objects, features and advantages will become more apparent from the specification and drawings that follow.

Figure 1 illustrates in cross-sectional representation a velocity determination system in accordance with a first embodiment of the invention.

Figure 2 shows in cross-sectional representation a fuze assembly in accordance with an embodiment of the invention.

Figure 3 is a schematic diagram of the programming of an on-board microprocessor.

Figure 4 graphically illustrates one embodiment of the information provided to an explosive projectile in accordance with the invention.

Figure 5 illustrates in cross-sectional representation a velocity determination system in accordance with an alternative embodiment of the invention.

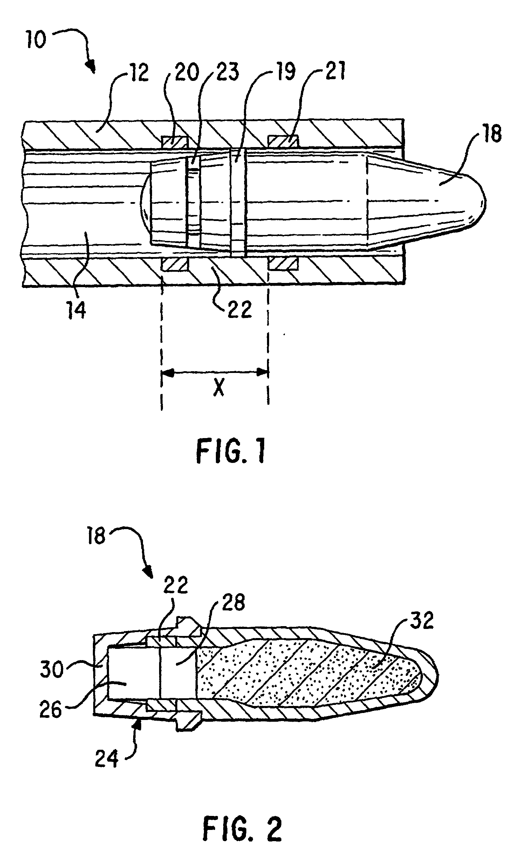

Figure 1 illustrates in cross-sectional representation a portion of a weapon 10 incorporating a velocity determination system in accordance with a first embodiment of the invention. The illustrated portion 10 represents the final section of travel of any size gun barrel 12 or launcher tube. "Gun barrel" as used herein, also incorporates launcher tubes and related devices.

The gun barrel 12 includes a centrally disposed bore 14 of a diameter effective to guide a projectile 18 using a rotating band 19 or obturator to provide guidance and a pressure seal.

The gun barrel 12 is formed from any material capable of providing support and guidance for the projectile 18 and to contain the propelling gases that drive the projectile. Materials for the barrel 12 range from high strength alloy steels, such as AISI/SAE 4340, for high pressure gun systems to lightweight composites such as a graphite filled epoxy for low pressure launcher systems.

AISI/SAE (American Iron and Steel Institute/Society of Automotive Engineers) 4340 is a medium carbon, low-alloy steel having the nominal composition, by weight, of 0.38%-0.43% carbon, 0.60%-0.80% manganese, 0.20%00.35% silicon, 0.70%-0.90% chromium, 1,65%-2.0% nickel, 0.20%-0.30% molybdenum and the balance iron.

Affixed to the bore 14 adjacent to the exit end of the barrel is at least one signal source. Preferably, there are a first signal source 20 and a second signal source 21, both embedded in a non-signal source material 22.

In one embodiment, the signal sources 20, 21 are permanent magnets and the non-signal source material 22 is a non-magnetic material, such as aluminum alloy 7075 (aluminum alloy 7075 has the nominal composition, by weight, of 1.2%-2.0% copper, 2.1%-2.9% magnesium, 0.18%-0.28% chromium, 5.1%-6.1% zinc and the balance aluminum).

Alternatively, the non-signal source material may constitute a portion of the gun barrel 12. A primary requirement of the non-signal source material is that it provide a clear separation between the first signal source 20 and the second signal source 21. The non-signal source material insures that when the projectile 18 passes the two signal sources 20,21 a receptor 23 on-board the projectile 18 receives two distinct signals.

In accordance with an alternative embodiment of the invention, described in more detail below, the signal sources 20,21 are metallic, such as AISI/SAE 1040 steel that has the nominal composition, by weight, of 0.36%-0.44% carbon, 0.60-0.90% manganese and the balance iron. The non-signal source material 22 is a non-metallic material such as an epoxy-graphite composite.

In all embodiments of the invention, the first signal source 20 may constitute the primary material of the gun barrel 12 with the non-signal material 22 separating the second signal source 21 from the gun barrel 12.

The embodied invention addresses the use of two passive signal sources 20,21, separated by a known fixed distance, "X", to provide a unique timing signal to the projectile 18 for the purpose of having the projectile 18 accurately compute its own gun barrel 12 exit velocity. The projectile 18 contains a receptor 23 that identifies passage of the projectile 18 past both the first 20 and the second 21 signal sources. In one embodiment, the signal sources are magnetic and the receptor is an induction coil or similar device that reacts to passage through a magnetic field. In an alternative embodiment, the signal sources are metallic and the receptor 23 is a magnetometer.

When the signal source is a permanent magnet, suitable materials for the permanent magnet include ferrous materials and rare earth based magnets. Typically, these permanent magnets will have a strength of between 500 Gaus and 5000 Gaus.

Preferably, there are at least two signal sources 20,21 separated by a precisely known distance, "X". While the value of "X" is arbitrary, and typically on the order of from about 51mm (2 inches) to about 508mm (20 inches), the precision in determining X is critical. The time for the projectile 18 to traverse X is utilized in velocity calculations. Since the projectile 18 typically has a muzzle exit velocity of between 152.4 meters per second (500 feet per second) and 1524 meters per second (5000 feet per second), the precision in measuring X should be at least ±0.25mm (±0.01 inch), preferably ±0.13mm (±0.005 inch) and most preferably ±.025mm (±0.001 inch).

As illustrated in Figure 2, the projectile 18 contains the receptor 23 housed either within or around the projectile body 30 and a microprocessor based electronic module 26 housed within the projectile body 30. Preferably, the microprocessor 26, and optionally also the receptor 23, is housed within a rearward portion of the projectile 18 as a portion of the fuze assembly 24.

One exemplary projectile 18 is of the explosive type and contains a safe and arm device 28 and an explosive payload 32. For the embodiment wherein the signal sources 20,21 are permanent magnets and the receptor an induction coil, the receptor 23 is housed within a non-ferrous portion of the projectile body 30, or alternatively, is wound about the outside of the projectile housing.

The induction coil 23 is comprised of multiple revolutions of an electrically conductive wire. The wire gage and the number of revolutions are dependent on the strength of the signal sources 20,21 and sensitivity of the microprocessor 26. One suitable induction coil has 36 concentric loops of 0.079mm diameter (40 gauge) wire circumscribing the longitudinal axis of the projectile 18.

The microprocessor 26 contains, at a minimum, a timing circuit used to measure the time differential between passage of the receptor 23 by the signal sources 20,21 and a logic circuit that starts and stops the timing circuit as a function of the voltage signal induced by the induction coil 23 by a magnetic field emanating from the signal sources 20,21.

The safe and arm device 28 may be any conventional safe and arm device and, typically includes a detonator as part of an open electrical circuit. A metallic wire is mechanically snapped into place if the acceleration and spin of the explosive projectile is within specified ranges. The metal wire completes an electric circuit arming the explosive projectile. A signal from the microprocessor 26 provides the electric current necessary to activate the detonator causing the explosive projectile 18 to burst.

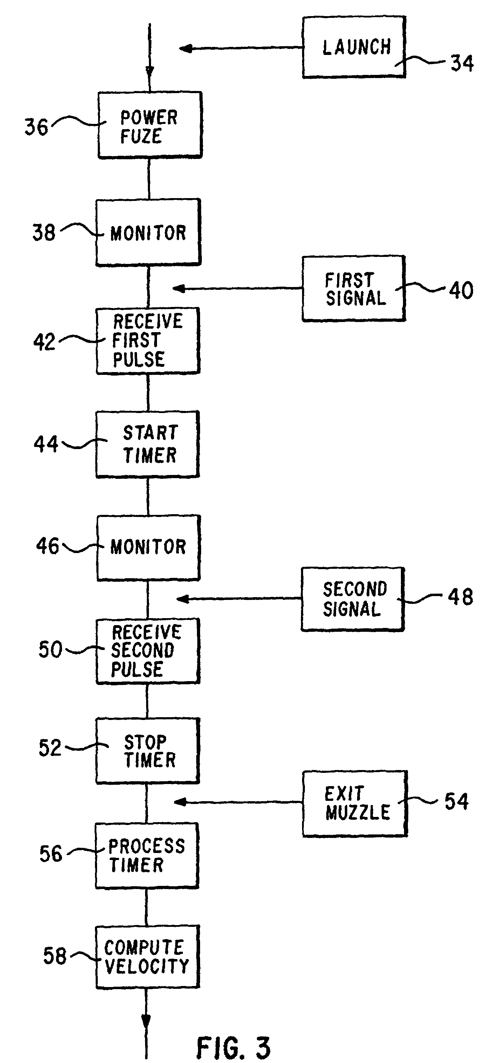

Figure 3 illustrates in block diagram an exemplary series of programming steps provided to the microprocessor, as well as the integration of those programming steps with external events.

The first external events are, in either order, the launch 34 of the projectile 18 and the powering up of the fuze 36. The first events are completed by any suitable means. For example, launching of the projectile 18 may be through conventional propellants, as typified by a rifle or canon. More exotic means such as rocket propulsion may also be employed. The only requirement on the launch means is that a velocity effective to drive the projectile past the signal sources and from the muzzle of the weapon is achieved.

Powering of the fuze 36 may be accomplished by a battery on-board the projectile, by an inductive power transfer coupled with capacitive storage or by any other suitable means. The primary requirement of the power up step 36 is that the microprocessor and the receptor are functioning when the projectile passes the signal sources.

After launch 34 and powering of the fuze 36, the fuze with the microprocessor begins to monitor 38 the receptor on-board the projectile. Upon passing the first signal source 40, the microprocessor receives a first signal 42 from the receptor. When the receptor is an induction coil and the signal sources magnets, the first signal is a voltage spike 42. Upon sensing the receptor signal, the microprocessor starts a timer 44 and then returns to monitoring 46 the receptor for a second signal.

Upon passing the second signal source 48, the microprocessor receives a second signal 50 from the receptor and stops 52 the timer. Either concurrent with passing the second signal source 48 or at some time interval later, the projectile exits 54 the muzzle of the weapon. The microprocessor then utilizes the timing data, and being programmed with the signal source spacing, "X", computes 58 the projectile velocity.

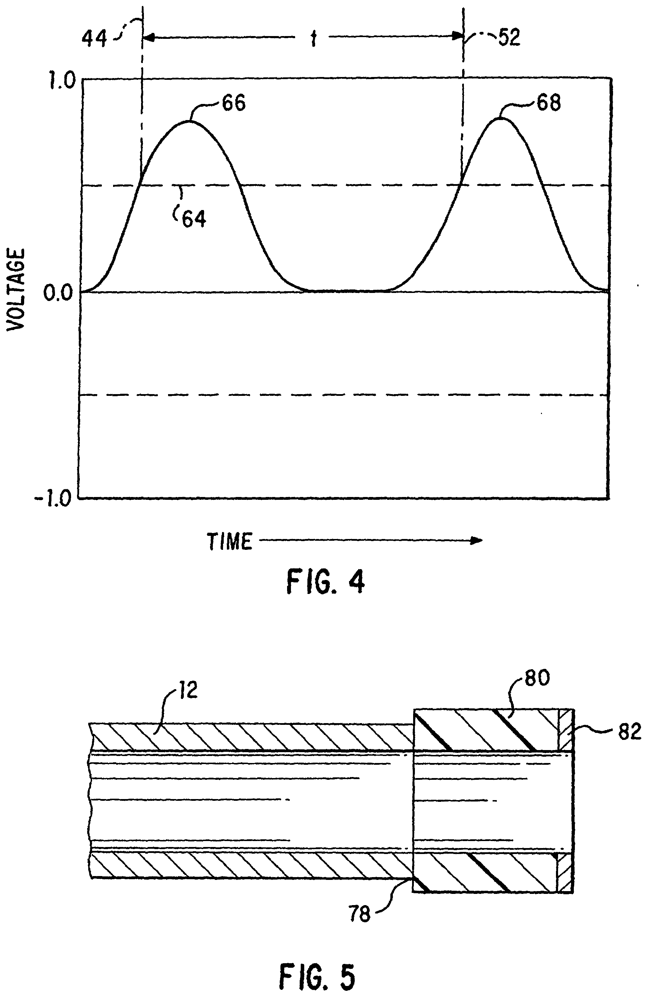

Figure 4 shows a typical signal pattern that the microprocessor receives for the receptor. A variety of methods can be utilized for the microprocessor to process the signal. The method illustrated in Figure 4 includes triggering the timer start 44 and timer stop 52 as functions of exceeding a specified threshold voltage level 64. This approach yields a time difference, "t" between start and stop.

Alternatively, processing of the signal may be to determine the signal peaks, 66, 68 and taking the time differential between these points.

The microprocessor 26, having been programmed with the distance, "X", and with the addition of the time differential, "t", computes the actual exit velocity of the projectile from the gun barrel.

Typically, "X" is from 51mm (2 inches) to 508mm (20 inches) and the projectile velocity on the order of 152.4 meters per second (500 feet per second) to 1524 meters per second (5000 feet per second). Passage of the signal sources occurs in a few milliseconds (typically 1-10 milliseconds). Since the timing information is obtained and stored on board the projectile, the microprocessor has on the order of 10 to 1000 times the passage time to process the time data and to compute the actual exit velocity. The microprocessor can utilize the exit velocity to predict or update time of flight data, or to perform to a higher degree of accuracy any function of the projectile requiring knowledge of the actual gun barrel exit velocity, such as fuze timing delay.

Figure 5 illustrates an alternative embodiment of the invention. In Figure 5, the gun barrel 12 is formed from a metallic material such as AISI/SAE 4340 steel. In this embodiment, the gun barrel is the first signal source. Attached to the exit end 78 of the gun barrel 12 is a non-metallic muzzle 80 formed from a suitable material such as an epoxy/graphite composite. The end of the non-metallic muzzle 80 opposite the exit end 78 is circumscribed by a metallic ring 82, such as AISI/SAE 4340 steel, that is the second signal source.

The non-metallic muzzle 80 is the non-signal material to provide clear separation between the signal sources 78,82. The receptor on-board a projectile is a magnetometer that is triggered by the presence, or absence, or a metallic material alongside the projectile.

While the invention has been described as containing two signal sources within the gun barrel, additional signal sources could be added to obtain a velocity profile with time. While the velocity profile is useful, it is not necessary to the basic objective of the invention, that is muzzle exit velocity measurement.

While the signal sources have been described as ring shape, they may be of any desired shape such as box shaped magnets embedded in the wall of the gun barrel or annular rings through which the projectile passes. Likewise, while the projectile fuze has been described as having a single receptor, multiple receptors are within the scope of the invention.

It is apparent that there has been provided in accordance with this invention a passive velocity measuring system that fully satisfies the objects, features and advantages set forth hereinabove. While the invention has been described in combination with specific embodiments thereof, it is evident that many alternatives, modifications and variations will be apparent to those skilled in the art in light of the foregoing description.

## Claims

1. A system for determining the velocity of a projectile (18), **characterized by**:
a gun barrel (12) that expels said projectile (18);
at least one signal source (20) supported by said gun barrel (12);
at least one receptor (23) on-board said projectile (18) that detects passage of said at least one signal source; and
means (26) on-board said projectile (18) in electrical communication with said receptor (23), said means (26) having been adapted to compute the velocity of said projectile (18)
characterized that said means (26) on-board said projectile is a microprozessor having been programmed and having a timing circuit and a logic circuit.

2. The system of claim 1 **characterized in that** a first signal source (20) and a second signal source (21) are both supported by said gun barrel (12) with a non-signal source (22) disposed therebetween.

3. The system of claim 2 **characterized in that** the distance "X" between the first signal source (20) and the second signal source (21) is from about 51mm to about 508mm.

4. The system of either claim 2 or claim 3 **characterized in that** said first signal source (20) and said second signal source (21) are both magnets and said receptor (23) is an induction coil.

5. The system of any one of claims 1, 2 or 3 **characterized in that** said gun barrel (12) is formed from a signal source material, a muzzle (80) formed from a non-signal source material is affixed to an exit end (78) of said gun barrel (12) and a second signal source material (82) is supported by said muzzle (80) in spaced relation to said exit end (78).

6. The system of claim 5 **characterized in that** said gun barrel (12) and said second source material (82) are formed from a metal and said muzzle (80) is non-metallic.

7. The system of claim 6 **characterized in that** said gun barrel (12) and said second source material (82) are both steel.

8. The system of any one of claims 1 to 7 **characterized in that** said receptor (23) is a magnetometer.

9. A sub-assembly on-board a projectile (18) to be expelled from a gun barrel (12), **characterized by**:
a receptor (23) that receives a plurality of signals from signal sources (20),(21) supported on said gun barrel (12) and transmits said plurality of signals to a microprocessor (26);
said microprocessor (26) programmed with the distance "X" between said plurality of signal sources (20),(21) and effective to calculate the expulsion velocity of said projectile (18) from a time delay between said plurality of signals and said programmed distance "X",
wherein
said microprocessor (26) has a timing circuit and a logic circuit.

10. The sub-assembly of claim 9 **characterized in that** said receptor (23) is selected from the group consisting of induction coils and magnetometers.

11. The sub-assembly of claim 9 or 10 further including an on-board power supply effective to operate said sub-assembly.

12. A method for on-board computation of the velocity of a projectile (18), **characterized by** the steps of:
a). expelling (34) said explosive projectile (18) from a gun barrel 12 at an unknown velocity;
b). determining (56) the time (44),(52) for said projectile (18) to pass at least two signal sources (40), (48) supported by said barrel 12 and spaced a known distance "X" apart; and
c). calculating (58) said unknown velocity on-board said projectile (18) from said time (44), (52) and known distance "X", the time for said calculating step (58) being greater than the time (44),(52) for said projectile (18) to traverse said gun barrel (12),
wherein
the time for calculating said unknown velocity is from 10 to 1000 times greater than the time (44), (52) for said projectile (18) to pass said at least two signal sources (40), (48),
said determining step (56) comprises receiving a first voltage pulse (42) and a second voltage pulse (50) as said projectile (18) passes respective first (40) and second (48) signal sources,
said determining step (56) comprises sensing a first metallic material (42) and a second metallic material (50) as said projectile (18) passes respective first (40) and second (48) signal sources, and
following said calculating step (58), time of flight data of said projectile (18) is corrected.

## Patentansprüche

1. System zum Bestimmen der Geschwindigkeit eines Projektils (18),
**gekennzeichnet durch**:
einen Gewehrlauf (12), aus dem das Projektil (18) ausgestoßen wird;
wenigstens eine Signalquelle (20), die an dem Gewehrlauf (12) gehaltert ist;
wenigstens einen Rezeptor (23) an Bord des Projektils (18), der die Passage der wenigstens einen Signalquelle detektiert; und **durch**
eine Einrichtung (26) an Bord des Projektils (18), die mit dem Rezeptor (23) in elektrischer Verbindung ist, wobei die Einrichtung (26) dazu ausgebildet ist, die Geschwindigkeit des Projektils (18) zu berechnen,
**dadurch** gekennzeichnet, dass die Einrichtung (26) an Bord des Projektils ein Mikroprozessor ist, der programmiert worden ist und eine Zeitsteuerschaltung sowie eine Logikschaltung aufweist.

2. System nach Anspruch 1,
**dadurch gekennzeichnet, dass** sowohl eine erste Signalquelle (20) als auch eine zweite Signalquelle (21) an dem Gewehrlauf (12) gehaltert sind, wobei eine Nicht-Signalquelle (22) zwischen ihnen angeordnet ist.

3. System nach Anspruch 2,
**dadurch gekennzeichnet, dass** die Distanz "X" zwischen der ersten Signalquelle (20) und der zweiten Signalquelle (21) ca. 51 mm bis ca. 508 mm beträgt.

4. System nach Anspruch 2 oder Anspruch 3,
**dadurch gekennzeichnet, dass** die erste Signalquelle (20) und die zweite Signalquelle (21) beide Magneten sind und der Rezeptor (23) eine Induktionsspule ist.

5. System nach einem der Ansprüche 1, 2 oder 3,
**dadurch gekennzeichnet, dass** der Gewehrlauf (12) aus einem Signalquellenmaterial gebildet ist, das eine aus einem Nicht-Signalquellenmaterial gebildete Mündung (80) an einem Austrittsende (78) des Gewehrlaufs (12) angebracht ist, und dass ein zweites Signalquellenmaterial (82) an der Mündung (80) im Abstand von dem Austrittsende (78) gehaltert ist.

6. System nach Anspruch 5,
**dadurch gekennzeichnet, dass** der Gewehrlauf (12) und das zweite Signalquellenmaterial (82) aus einem Metall gebildet sind und die Mündung (80) nichtmetallisch ist.

7. System nach Anspruch 6,
**dadurch gekennzeichnet, dass** der Gewehrlauf (12) und das zweite Signalquellenmaterial (82) beide aus Stahl sind.

8. System nach einem der Ansprüche 1 bis 7,
**dadurch gekennzeichnet, dass** der Rezeptor (23) ein Magnetometer ist.

9. Unteranordnung an Bord eines Projektils (18) zum Austreiben aus einem Gewehrlauf (12),
**gekennzeichnet durch**:
einen Rezeptor (23), der eine Mehrzahl von Signalen von Signalquellen (20, 21) erhält, die an dem Gewehrlauf (12) gehaltert sind, und die Mehrzahl von Signalen zu einem Mikroprozessor (26) sendet;
wobei der Mikroprozessor (26) mit der Distanz "X" zwischen der Mehrzahl von Signalquellen (20, 21) programmiert wird sowie zum Berechnen der Ausstoßgeschwindigkeit des Projektils (18) aufgrund einer Zeitverzögerung zwischen den mehreren Signalen und der programmierten Distanz "X" wirksam ist,
wobei der Mikroprozessor (26) eine Zeitsteuerschaltung und eine logische Schaltung aufweist.

10. Unteranordnung nach Anspruch 9,
**dadurch gekennzeichnet, dass** der Rezeptor (23) aus der Gruppe gewählt ist, die aus Induktionsspulen und Magnetometern besteht.

11. Unteranordnung nach einem der Ansprüche 9 oder 10, weiterhin mit einer an Bord vorhandenen Stromversorgung, die zum Betreiben der Unteranordnung wirksam ist.

12. Verfahren für die an Bord erfolgende Berechnung der Geschwindigkeit eines Projektils (18),
**gekennzeichnet durch** folgende Schritte:
a) Ausstoßen (34) des explosiven Projektils (18) aus einem Gewehrlauf (12) mit einer unbekannten Geschwindigkeit;
b) Bestimmen (56) der Zeit (44, 52), die das Projektil (18) zum Passieren von wenigstens zwei Signalquellen (40, 48) benötigt, die an dem Lauf (12) gehaltert sind und in einer bekannten Distanz "X" voneinander beabstandet sind; und
c) Berechnen (58) der unbekannten Geschwindigkeit an Bord des Projektils (18) anhand der Zeit (44, 52) und der bekannten Distanz "X", wobei die Zeit für den Berechnungsschritt (58) länger ist als die Zeit (44, 52), die das Projektil (18) für die Passage des Gewehrlaufs (12) benötigt,
wobei die Zeit zum Berechnen der unbekannten Geschwindigkeit um das Zehn- bis Eintausendfache größer ist als die Zeit (44, 52), die das Projektil (18) für die Passage der wenigstens zwei Signalquellen (40, 48) benötigt,
wobei der Bestimmungsschritt (56) den Empfang eines ersten Spannungsimpulses (429 und eines zweiten Spannungsimpulses (50) beinhaltet, während das Projektil (18) die erste (40) bzw. die zweite Signalquelle (48) passiert,
wobei der Bestimmungsschritt (56) die Erfassung eines ersten metallischen Materials (42) und eines zweiten metallischen Materials (50) beinhaltet, während das Projektil (18) die erste (40) bzw. die zweite Signalquelle (48) passiert, und
wobei nach dem Berechnungsschritt (58) die Zeit der Flugdaten des Projektils (18) korrigiert wird.

## Revendications

1. Système en vue de déterminer la vitesse d'un projectile (18), **caractérisé par** :
un fût (12) qui expulse ledit projectile (18) ;
au moins une source de signaux (20) supportée par ledit fût (12) ;
au moins un récepteur (23) à bord dudit projectile (18) qui détecte le passage de ladite au moins une source de signaux ; et
des moyens (26) à bord dudit projectile (18) en communication électrique avec ledit récepteur (23), lesdits moyens (26) ayant été adaptés pour calculer la vitesse dudit projectile (18),
**caractérisé en ce que** lesdits moyens (26) à bord dudit projectile sont un microprocesseur ayant été programmé possédant un circuit de synchronisation et un circuit logique.

2. Système selon la revendication 1, **caractérisé en ce qu'**une première source de signaux (20) et une seconde source de signaux (21) sont toutes deux supportées par ledit fût (12) avec une source de non signal (22) disposée entre elles.

3. Système selon la revendication 2, **caractérisé en ce que** la distance "X" entre la première source de signaux (20) et la seconde source de signaux (21) est comprise entre environ 51 mm et environ 508 mm.

4. Système selon l'une de la revendication 2 ou de la revendication 3, **caractérisé en ce que** ladite première source de signaux (20) et ladite seconde source de signaux (21) sont toutes deux des aimants et ledit récepteur (23) est une bobine d'induction.

5. Système selon l'une quelconque des revendications 1, 2 ou 3, **caractérisé en ce que** ledit fût (12) est réalisé en un matériau source de signaux, une bouche (80) formée en un matériau source de non signaux est fixée à une extrémité de sortie (78) dudit fût (12) et un second matériau source de signaux (82) est supporté par ladite bouche (80) espacée de ladite extrémité de sortie (78).

6. Système selon la revendication 5, **caractérisé en ce que** ledit fût (12) et ledit second matériau source de signaux (82) sont réalisés en un métal et ladite bouche (80) est non métallique.

7. Système selon la revendication 6, **caractérisé en ce que** ledit fût (12) et ledit second matériau source de signaux (82) sont tous deux en acier.

8. Système selon l'une quelconque des revendications 1 à 7, **caractérisé en ce que** ledit récepteur (23) est un magnétomètre.

9. Sous-ensemble à bord d'un projectile (18) destiné à être expulsé d'un fût (12), **caractérisé par** :
un récepteur (23) qui reçoit une pluralité de signaux de sources de signaux (20), (21) supportées par ledit fût (12) et transmet ladite pluralité de signaux à un microprocesseur (26) ;
ledit microprocesseur (26) programmé avec la distance "X" entre ladite pluralité de sources de signaux (20), (21) et apte à calculer la vitesse d'expulsion dudit projectile (18) à partir d'un retard de temps entre ladite pluralité de signaux et ladite distance programmée "X",
dans lequel ledit microprocesseur (26) possède un circuit de synchronisation et un circuit logique.

10. Sous-ensemble selon la revendication 9, **caractérisé en ce que** ledit récepteur (23) est choisi parmi le groupe constitué par des bobines d'induction et des magnétomètres.

11. Sous-ensemble selon la revendication 9 ou 10, comprenant en outre une alimentation embarquée apte à actionner ledit sous-ensemble.

12. Procédé pour un calcul à bord de la vitesse d'un projectile (18), **caractérisé par** les étapes consistant à :
a) expulser (34) ledit projectile explosif (18) depuis un fût (12) à une vitesse inconnue ;
b) déterminer (56) le temps (44), (52) mis par ledit projectile (18) pour passer au moins devant deux sources de signaux (40), (48) supportées par ledit fût (12) et espacées d'une distance connue "X" l'une de l'autre ; et
c) calculer (58) ladite vitesse inconnue dudit projectile (18) à partir dudit temps (44), (52) et de la distance connue "X", le temps pour ladite opération de calcul (58) étant supérieur au temps (44), (52) mis par ledit projectile (18) pour parcourir ledit fût (12),
dans lequel le temps de calcul de ladite vitesse inconnue est de 10 à 1000 fois supérieur au temps (44), (52) mis par ledit projectile (18) pour passer devant lesdites au moins deux sources de signaux (40), (48),
ladite étape de détermination (56) comporte la réception d'une première impulsion de tension (42) et d'une seconde impulsion de tension (50) lorsque ledit projectile (18) passe devant les première (40) et seconde (48) sources de signaux respectives,
ladite étape de détermination (56) comporte la détection d'un premier matériau métallique (42) et d'un second matériau métallique (50) lorsque ledit projectile (18) passe devant les première (40) et seconde (48) sources de signaux respectives, et
à la suite de ladite étape de calcul (58), le temps de données de vol dudit projectile (18) est corrigé.
